# EUROPÄISCHE PATENTSCHRIFT

(11) **EP 4 326 542 B1**
(45) Veröffentlichungstag und Bekanntmachung des Hinweises auf die Patenterteilung: **12.03.2025**
(21) Anmeldenummer: 22835599.6
(22) Anmeldetag: 08.12.2022
(51) Int. Cl.: B29C 73/16

(54) **REIFENREPARATURVORRICHTUNG ZUR ANBRINGUNG AN EINEM FAHRZEUGRAD**
TIRE REPAIR APPARATUS FOR ATTACHMENT TO A VEHICLE WHEEL
APPAREIL DE RÉPARATION DE PNEU DESTINÉ À ÊTRE FIXÉ À UNE ROUE DE VÉHICULE

(43) Veröffentlichungstag der Anmeldung: 28.02.2024
(73) Patentinhaber: KT Projektentwicklungs-GmbH, 74199 Untergruppenbach (DE)
(72) Erfinder: TSOUROUKIDOU, Eleni, 74199 Untergruppenbach (DE); TSIBERIDIS, Konstantin, 74199 Untergruppenbach (DE)
(74) Vertreter: Beyer, Andreas
(86) Internationale Anmeldenummer: PCT/EP2022/085045
(87) Internationale Veröffentlichungsnummer: WO 2023/198298

(56) Entgegenhaltungen:
- DE-A1- 102021 101 463
- US-A1- 2019 023 091

## Beschreibung

Die Erfindung betrifft das Gebiet der Reifenreparaturvorrichtungen für Kraftfahrzeugräder. Früher war es weithin üblich, Kraftfahrzeuge mit einem Reserverad auszustatten. Ein solches Reserverad ermöglicht im Falle einer Reifenpanne eine Weiterfahrt, indem das defekte Fahrzeugrad durch das mitgeführte Reserverad ersetzt wird. Ein Austausch eines durch einen platten Reifen defekt gewordenen Fahrzeugrads erfordert allerdings, das Fahrzeug mittels eines Wagenhebers anzuheben, das defekte Fahrzeugrad vom Fahrzeug zu lösen, anschließend das Reserverad zu montieren und schließlich das defekte Fahrzeugrad im Fahrzeug zu verstauen.

Um diesen Aufwand zu verringern und auch aus Gewichtseinsparungsgründen sind Kraftfahrzeuge in neuerer Zeit vermehrt mit einer Reifenreparaturvorrichtung anstelle eines Reserverades ausgerüstet worden. Eine solche Reifenreparaturvorrichtung, die in Fachkreisen auch unter der Bezeichnung "Tirefit" bekannt ist, findet üblicherweise unterhalb des Kofferraumbodens eines Kraftfahrzeugs Platz und umfasst einen Dichtmittelbehälter, in dem sich ein flüssiges Reifendichtmittel befindet, sowie einen elektrisch antreibbaren Luftkompressor. Im Falle einer Reifenpanne wird eine solche in der Regel kastenförmige Reifenreparaturvorrichtung aus dem Fahrzeugkofferraum herausgenommen und neben das defekte Fahrzeugrad gestellt. Sodann wird ein Verbindungsschlauch der Reifenreparaturvorrichtung mit dem Reifenventil des defekten Fahrzeugrades verbunden. Schließlich wird ein Stecker eines Stromzuführungskabels der Reifenreparaturvorrichtung in eine fahrzeugseitige Steckdose gesteckt, die beispielsweise eine Zigarettenanzünderbuchse des Fahrzeugs sein kann. Die Reifenreparaturvorrichtung wird dann eingeschaltet und veranlasst den Luftkompressor, das Reifendichtmittel in den defekten Fahrzeugreifen zu pumpen und den Fahrzeugreifen wieder unter Druck zu setzen, damit die Fahrt fortgesetzt werden kann. Zuvor muss jedoch die Reifenreparaturvorrichtung wieder von dem zwischenzeitlich reparierten Fahrzeugrad getrennt und im Fahrzeug verstaut werden.

Aus der DE 10 2021 101463 A1 ist eine Reifenreparaturvorrichtung mit den im Oberbegriff des Patentanspruchs 1 angegebenen Merkmalen bekannt.

Der Erfindung liegt die Aufgabe zugrunde, eine gegenüber den Reifenreparaturvorrichtungen vom "Tirefit"-Typ verbesserte Reifenreparaturvorrichtung bereitzustellen, deren Anwendung im Falle einer Reifenpanne noch einfacher und narrensicherer ist.

Diese Aufgabe wird erfindungsgemäß durch eine Reifenreparaturvorrichtung mit den im Patentanspruch 1 angegebenen Merkmalen gelöst. Im Gegensatz zu den bekannten Reifenreparaturvorrichtungen vom "Tirefit"-Typ ist die erfindungsgemäße Reifenreparaturvorrichtung zur Anbringung an einem Fahrzeugrad vorgesehen, das mit Radmuttern oder Radschrauben an einem Fahrzeug befestigt ist. Letzteres trifft auf die überwiegende Mehrzahl aller Kraftfahrzeuge zu. Üblicherweise werden vier oder fünf Radmuttern oder Radschrauben dazu verwendet, ein Fahrzeugrad am Fahrzeug zu befestigen. Solche Radmuttern oder Radschrauben bestehen aus Stahl und sind von der Außenseite eines Fahrzeugrads zugänglich, um das Fahrzeugrad am Fahrzeug montieren und vom Fahrzeug demontieren zu können. Die erfindungsgemäße Reifenreparaturvorrichtung weist ein Trägerelement auf, das zumindest näherungsweise plattenförmig ausgebildet sein kann und dem eine Mittelachse und eine Umfangsrichtung zugeordnet ist. Die Mittelachse des Trägerelements stellt bei an einem Fahrzeugrad angebrachter Reifenreparaturvorrichtung vorzugsweise eine Verlängerung der Mittelachse des Fahrzeugrads dar. Die Umfangsrichtung des Trägerelements korrespondiert bei einer an einem Fahrzeugrad angebrachten Reifenreparaturvorrichtung mit der Umfangsrichtung des Fahrzeugrads. Das Trägerelement hat eine radzugewandte Seite und eine radabgewandte Seite, jeweils bezogen auf einen an einem Fahrzeugrad angebrachten Zustand der Reifenreparaturvorrichtung. Das Trägerelement kann beispielsweise ein Stahlblechbauteil sein, das durch einen Stanz- und/oder Press- und/oder Tiefziehvorgang hergestellt worden ist. Die äußere Gestalt des Trägerelements ist vorzugsweise zumindest annähernd kreisförmig und im Wesentlichen flach, damit das Trägerelement sich gut in den im Zentrum eines Fahrzeugrades vorhandenen Raum einfügen kann.

Das Trägerelement, das auch als Strukturbauteil bezeichnet werden kann, dient als tragendes Bauteil der Reifenreparaturvorrichtung. An dem Trägerelement ist ein Kompressor befestigt, der dazu dient, in bekannter Art und Weise Luft anzusaugen und unter Druck zu setzen, um mit der unter Druck gesetzten Luft ein Reifendichtmittel in einen defekten Fahrzeugreifen zu befördern und in dem Fahrzeugreifen Druck aufzubauen. Der Kompressor kann von beliebiger für den genannten Zweck geeigneter Art und Weise sein. In Ausführungsbeispielen der erfindungsgemäßen Reifenreparaturvorrichtung ist der Kompressor ein Kolbenkompressor, vorzugsweise ein Kolbenkompressor mit einem doppeltwirkenden Kolben.

Mit dem Kompressor betriebsfähig verbunden ist eine Antriebseinrichtung für den Kompressor. Die Kompressorantriebseinrichtung kann ebenfalls von beliebiger, für den genannten Zweck geeigneter Art und Weise sein. Beispielsweise kann die Kompressorantriebseinrichtung ein hydraulisch oder pneumatisch angetriebener Motor sein. In bevorzugten Ausführungsformen der erfindungsgemäßen Reifenreparaturvorrichtung ist die Kompressorantriebseinrichtung ein Elektromotor.

Die erfindungsgemäße Reifenreparaturvorrichtung umfasst ferner einen Dichtmittelbehälter zur Aufnahme eines Reifendichtmittels, der fluidleitend mit dem Kompressor verbunden ist. Ferner umfasst die Reifenreparaturvorrichtung eine Verbindungsleitung, die dazu ausgestaltet ist, mit dem Dichtmittelbehälter und einem zu reparierenden Reifen fluidleitend verbunden zu werden. Diese Verbindungsleitung kann ein separates Teil sein oder kann an ihrem einen Ende bereits mit der Reifenreparaturvorrichtung verbunden sein und braucht dann im Falle einer Reifenpanne nur noch mit dem zu reparierenden Reifen verbunden zu werden, üblicherweise durch Anschließen der Verbindungsleitung an das Reifenventil des defekten Fahrzeugrads. Die Verbindungsleitung kann ein Rückschlagventil enthalten, um zu verhindern, dass Luft aus dem Reifen in die Reifenreparaturvorrichtung strömen kann. Ein solches Rückschlagventil verhindert auch einen Austritt von Luft und Dichtmittel aus einem mittels der Reifenreparaturvorrichtung reparierten Reifen, falls sich die Verbindungsleitung von der Reifenreparaturvorrichtung lösen sollte, beispielsweise während der Weiterfahrt nach einer Reparatur eines Reifens.

Zur einfachen Anbringung an einem Fahrzeugrad weist die erfindungsgemäße Reifenreparaturvorrichtung mehrere hülsenförmige Halterungselemente auf, die jeweils ein Befestigungsende und ein freies Ende haben. Die hülsenförmigen Halterungselemente sind an ihrem Befestigungsende mit dem Trägerelement verbunden und erstrecken sich jeweils von der radzugewandten Seite des Trägerelements aus entlang einer zur Mittelachse parallelen Längsachse bis zu ihrem freien Ende. Die hülsenförmigen Halterungselemente sind in Umfangsrichtung des Trägerelements voneinander beabstandet, wobei die Positionen der hülsenförmigen Halterungselemente zumindest näherungsweise mit Positionen von Radmuttern oder Radschrauben korrespondieren, mit denen ein zu reparierendes Fahrzeugrad an einem Fahrzeug befestigt ist. Die Anzahl der hülsenförmigen Halterungselemente entspricht vorzugsweise der Anzahl der Radmuttern oder Radschrauben, mit denen das Fahrzeugrad am Fahrzeug befestigt ist, jedoch können, insbesondere wenn ein Fahrzeugrad mit vielen Radmuttern oder Radschrauben befestigt ist, auch weniger Halterungselemente als Radmuttern oder Radschrauben vorgesehen sein. Beispielsweise können drei hülsenförmige Halterungselemente ausreichen, um eine erfindungsgemäße Reifenreparaturvorrichtung sicher an einem Fahrzeugrad anzubringen.

Ein dem freien Ende benachbarter Endabschnitt jedes hülsenförmigen Halterungselements ist dazu ausgeführt, haltend mit einem Kopf einer Radmutter oder Radschraube in Eingriff zu kommen. Mit "haltend in Eingriff zu kommen" ist hier gemeint, dass die hülsenförmigen Halterungselemente einer erfindungsgemäßen Reifenreparaturvorrichtung auf die zugehörigen Köpfe der Radmuttern oder Radschrauben des zu reparierenden Fahrzeugrads aufgesteckt werden und dann die Reifenreparaturvorrichtung selbsttätig an dem Fahrzeugrad festhalten. Mit "zumindest näherungsweise mit Positionen von Radmuttern oder Radschrauben korrespondieren" ist gemeint, dass die hülsenförmigen Halterungselemente mit einem Spiel in seitlicher Richtung, d.h. radial bezüglich ihrer Längsachse, an dem Trägerelement angebracht sein können, wobei dieses seitliche Spiel es einem hülsenförmigen Halterungselement ermöglich, sich beim Aufstecken auf die zugeordnete Radmutter oder Radschraube selbsttätig auf diese Radmutter oder Radschraube zu zentrieren. Ausführungsformen der erfindungsgemäßen Reifenreparaturvorrichtung, bei denen einige oder alle hülsenförmigen Halterungselemente mit seitlichem Spiel gelagert sind, können auf verschiedenen Typen von Fahrzeugrädern angebracht werden, weil die hülsenförmigen Halterungselemente sich im Rahmen ihres seitlichen Spiels auf unterschiedliche Lochkreise und Schraubenpositionen einstellen können. Ist eine Reifenreparaturvorrichtung nur für ein bestimmtes Fahrzeug vorgesehen, bei dem die Positionen der Radmuttern oder Radschrauben genau bekannt sind, können die hülsenförmigen Halterungselemente aber auch ohne seitliches Spiel exakt an den Positionen angebracht sein, die mit den Positionen der Radmuttern oder Radschrauben korrespondieren.

Eine erfindungsgemäße Reifenreparaturvorrichtung kann schnell und einfach an einem zu reparierenden Fahrzeugrad angebracht werden, ohne dass zuvor irgendwelche Teile wie beispielsweise eine Radnabenabdeckung entfernt werden müssen. Die Anbringung einer erfindungsgemäßen Reifenreparaturvorrichtung am Fahrzeugrad erfolgt in simpler Weise durch einfaches Aufschieben ihrer hülsenförmigen Halterungselemente auf zugeordnete Köpfe von Radmuttern oder Radschrauben, mit denen das Fahrzeugrad am Fahrzeug befestigt ist. Es muss dann lediglich noch die Verbindungsleitung mit dem zu reparierenden Fahrzeugrad verbunden werden, beispielsweise durch Aufschrauben eines freien Endes der Verbindungsleitung auf das Reifenventil des Fahrzeugrades, und gegebenenfalls muss das andere Ende der Verbindungsleitung noch mit der Reifenreparaturvorrichtung verbunden werden (falls dieses andere Ende nicht bereits fest mit der Reifenreparaturvorrichtung verbunden ist). Nach Benutzung der erfindungsgemäßen Reifenreparaturvorrichtung kann diese bei einer Weiterfahrt am Fahrzeugrad verbleiben, da sie durch die hülsenförmigen Halterungselemente sicher am Fahrzeugrad gehalten ist.

Um ein Aufsetzen der erfindungsgemäßen Reifenreparaturvorrichtung auf ein Fahrzeugrad zu erleichtern, ist bei bevorzugten Ausführungsformen das freie Ende jedes hülsenförmigen Halterungselements mit einer trichterförmigen Erweiterung versehen. Vorzugsweise ist dabei jedes hülsenförmige Halterungselement um seine Längsachse drehbar gelagert. Das hülsenförmige Halterungselement kann sich dadurch noch leichter auf die zugeordnete Radmutter oder Radschraube zentrieren. Gemäß einer besonders bevorzugten Ausführungsform weist die trichterförmige Erweiterung jedes hülsenförmigen Halterungselements auf ihrer Innenseite wendelsegmentförmige Leitflächen auf, die bei einem Kontakt mit einem Kopf der zugeordneten Radmutter oder Radschraube das hülsenförmige Halterungselement durch eine entsprechende Drehung, die durch den Kontakt zwischen den wendelsegmentförmigen Leitflächen und dem Kopf ausgelöst wird, auf diesen Kopf zentrieren. Dabei kann der dem freien Ende jedes hülsenförmigen Halterungselements benachbarte Endabschnitt eine innere Querschnittsform aufweisen, die der äußeren Querschnittsform des Kopfes der Radmutter oder Radschraube entspricht. Üblicherweise haben Köpfe von Radmuttern oder Radschrauben einen sechseckigen äußeren Querschnitt, sodass dann der innere Querschnitt des Endabschnitts jedes hülsenförmigen Halterungselements ebenfalls sechseckig ausgeführt sein kann. Eine solche korrespondierende Ausbildung des Querschnitts des Endabschnitts jedes hülsenförmigen Halterungselements verbessert den mechanischen Eingriff des Endabschnitts mit dem zugeordneten Kopf einer Radmutter oder Radschraube.

Der Endabschnitt jedes hülsenförmigen Halterungselements kann auf verschiedene Art und Weise haltend mit einem Kopf einer Radmutter oder Radschraube in Eingriff kommen. Beispielsweise kann der Endabschnitt auf seiner Innenseite mit einer Reihe von in Längsrichtung aufeinanderfolgender Rastvorsprünge versehen sein, die beim Aufschieben des hülsenförmigen Halterungselements auf den Kopf einer Radmutter oder Radschraube rastend oder klemmend mit diesem Kopf in Eingriff treten. Gemäß einer Ausführungsform ist ein Federring, häufig auch als Sprengring bezeichnet, im Endabschnitt des hülsenförmigen Halterungselements angebracht und gehalten. Der Innendurchmesser dieses Feder- oder Sprengringes ist etwas kleiner als der Außendurchmesser des Kopfes einer Radmutter oder Radschraube, mit dem der Endabschnitt des hülsenförmigen Halterungselements in Eingriff treten soll. Beim Aufschieben des Endabschnitts auf den Kopf der Radmutter oder Radschraube weitet sich der Federring auf und kann dann in Rastausnehmungen einrasten, die auf den Umfangsflächen des Kopfes der Radmutter oder Radschraube vorhanden sind. Auf diese Weise wird die Reifenreparaturvorrichtung sicher am Fahrzeugrad gehalten.

Bei anderen Ausgestaltungen einer erfindungsgemäßen Reifenreparaturvorrichtung, die auch mit der vorgenannten Ausführungsform kombiniert werden können, ist in dem Endabschnitt jedes hülsenförmigen Halterungselements ein Magnet befestigt, der an einem Kopf einer Radmutter oder Radschraube durch magnetische Wechselwirkung anhaften kann. Vorzugsweise ist der Magnet in Richtung der Längsachse des hülsenförmigen Trägerelements federnd gelagert und in Richtung des freien Endes des hülsenförmigen Halterungselements federnd vorgespannt. Besonders bevorzugt ist der Magnet in dem Endabschnitt des hülsenförmigen Halterungselements entgegen der federnden Vorspannung in mehrere entlang der Längsachse aufeinanderfolgende Rastpositionen verschiebbar. Beim Aufschieben der hülsenförmigen Halterungselemente einer erfindungsgemäßen Reifenreparaturvorrichtung auf die zugeordneten Köpfe von Radmuttern oder Radschrauben bekommt ein Benutzer somit eine haptische Rückmeldung des Aufsteckvorgangs, die dazu verwendet werden kann, ein korrektes Aufschieben zu signalisieren. Beispielsweise kann ein Benutzer dazu instruiert werden, die Reifenreparaturvorrichtung soweit auf die Köpfe der Radmuttern oder Radschrauben aufzuschieben, bis er/sie drei aufeinanderfolgende Klicks wahrnehmen konnte. Die Rastpositionen verhindern darüber hinaus, dass sich der Magnet in dem Endabschnitt des hülsenförmigen Halterungselements ungewollt entgegen der federnden Vorspannung in das hülsenförmige Halterungselement hinein verschiebt.

Der in dem Endabschnitt jedes hülsenförmigen Halterungselements angebrachte Magnet ist vorzugsweise scheiben- oder zylinderförmig. Seine Außenform kann kreisrund sein oder kann der Außenform des Kopfes der Radmutter oder Radschraube entsprechen. Die Außenform des Magneten kann also beispielsweise sechseckig sein.

Zur Verstärkung der Magnetwirkung kann jeder Magnet in einem Feldlinienfokussierungsbauteil aufgenommen sein, das dafür sorgt, dass die magnetischen Feldlinien des Magneten sich auf den zugeordneten Kopf einer Radmutter oder Radschraube konzentrieren, um so die magnetische Wechselwirkung und damit die Haltekraft zu verstärken.

Bei herkömmlichen Reifenreparaturvorrichtungen vom "Tirefit"-Typ ist das Reifendichtmittel eine einzige Flüssigkeit. Ein solches Reifendichtmittel hat jedoch nur eine begrenzte Lebensdauer und damit eine entsprechend zeitlich begrenzte Verwendungsdauer. Zur Überwindung dieses Nachteils weist bei bevorzugten Ausführungsformen der erfindungsgemäßen Reifenreparaturvorrichtung der Dichtmittelbehälter zwei getrennte Kammern für zwei Komponenten eines Reifendichtmittels sowie eine Mischkammer zum Vermischen dieser beiden Komponenten auf. Aufgrund der dadurch ermöglichten, getrennten Aufbewahrung zweier Komponenten eines Reifendichtmittels findet eine Alterung des Reifendichtmittels nicht mehr oder nur noch äußerst langsam statt, weshalb die Verwendbarkeit einer solchermaßen ausgestatteten Reifenreparaturvorrichtung für einen viel längeren Zeitraum gegeben ist. Erst bei Benutzung der Reifenreparaturvorrichtung werden mittels des Kompressors die zwei Komponenten aus den zwei getrennten Kammern in die Mischkammer gepumpt, dort vermischt und dann in den zu reparierenden Reifen geleitet. Vorzugsweise befindet sich diese Mischkammer an einer Stelle, die einem Anschluss für die Verbindungsleitung unmittelbar vorgelagert ist. Das vermischte Reifendichtmittel wird dann durch die Verbindungsleitung in den zu reparierenden Reifen geleitet. Falls es das verwendete Reifendichtmittel erfordert, können auch mehr als zwei Kammern für Komponenten eines Reifendichtmittels in dem Dichtmittelbehälter vorhanden sein. Ebenso ist es möglich, im Dichtmittelbehälter nur eine einzige Kammer für das Reifendichtmittel vorzusehen, wenn das verwendete Reifendichtmittel nur eine Komponente umfasst. Eine Mischkammer zur Vermischung mehrerer Komponenten des Reifendichtmittels kann dann entfallen.

Bei vorteilhaft ausgestalteten Ausführungsformen der erfindungsgemäßen Reifenreparaturvorrichtung bildet der Dichtmittelbehälter ein das Trägerelement und den Kompressor überdeckendes Gehäuse der Reifenreparaturvorrichtung. Da die erfindungsgemäße Reifenreparaturvorrichtung aufgrund ihrer Anbringung an den Radmuttern oder Radschrauben des zu reparierenden Fahrzeugrades in der Mitte des Fahrzeugrades befestigt wird, bietet es sich an, das Trägerelement mit einem zumindest näherungsweise runden Außenumfang auszuführen. Ein als Gehäuse ausgebildeter Dichtmittelbehälter hat dann vorzugsweise ebenfalls eine runde Außenform und ist darüber hinaus abgeflacht, um in axialer Richtung möglichst wenig vom Fahrzeugrad hervorzustehen.

Damit eine erfindungsgemäße Reifenreparaturvorrichtung möglichst schnell und einfach in Betrieb gesetzt werden kann, umfasst die Reifenreparaturvorrichtung vorzugsweise einen Energiespeicher zum Betreiben der Kompressorantriebseinrichtung, der mit der Kompressorantriebseinrichtung betriebsfähig verbunden ist. Ein solcher Energiespeicher kann beispielsweise ein Druckluftbehälter sein, wenn die Antriebseinrichtung ein pneumatisch betreibbarer Motor ist. Vorzugsweise ist der Energiespeicher jedoch als eine Batterie oder eine Mehrzahl von Batterien ausgeführt, wobei die in der Batterie oder den Batterien gespeicherte elektrische Energie zum Antrieb eines Elektromotors dient, der die Antriebseinrichtung für den Kompressor bildet. Die Batterie oder die Mehrzahl von Batterien können aufladbare oder nicht aufladbare Batterien sein. Alternativ oder auch zusätzlich kann die erfindungsgemäße Reifenreparaturvorrichtung einen Anschluss aufweisen, der es ermöglicht, ihr Energie (insbesondere Strom) von außen zuzuführen. Beispielsweise kann an der Reifenreparaturvorrichtung eine Buchse vorhanden sein, die mittels eines Stromkabels mit z.B. einem Zigarettenanzünder im Fahrzeug oder mit einer Powerbank verbunden werden kann, um es auf diese Weise zu ermöglichen, die Reifenreparaturvorrichtung mit externer Energie zu betreiben.

Um zu verhindern, dass sich eine erfindungsgemäße Reifenreparaturvorrichtung ungewollt oder zur Unzeit in Betrieb setzt, weist bei bevorzugten Ausführungsformen der Reifenreparaturvorrichtung die Verbindungsleitung an einem mit dem zu reparierenden Reifen zu verbindenden Ende einen Überwachungsschalter auf, der einen Betrieb der Antriebseinrichtung nur dann ermöglicht, wenn das mit dem zu reparierenden Reifen zu verbindende Ende der Verbindungsleitung tatsächlich mit dem Reifen verbunden ist. Beispielsweise kann dieser Überwachungsschalter ein Mikroschalter sein, der beim Aufschrauben des freien Endes der Verbindungsleitung auf das Reifenventil des zu reparierenden Fahrzeugrades betätigt wird und dadurch einer Steuereinrichtung der Reifenreparaturvorrichtung signalisiert, dass die Verbindungsleitung korrekt mit dem zu reparierenden Fahrzeugrad verbunden ist. Die Reifenreparaturvorrichtung kann dann in Betrieb gesetzt werden oder setzt sich automatisch in Betrieb.

Es wurde bereits erwähnt, dass die Antriebseinrichtung einer erfindungsgemäßen Reifenreparaturvorrichtung vorzugsweise ein Elektromotor ist. Zur platzsparenden und geschützten Unterbringung ist ein solcher Elektromotor bei bevorzugten Ausführungsbeispielen in einer tellerförmigen Vertiefung auf der radzugewandten Seite des Trägerelements angeordnet, wobei diese Vertiefung sich vorzugsweise in einem Zentrum des Trägerelements und damit auch im Zentrum des zu reparierenden Fahrzeugrades befindet.

Ausführungsbeispiele einer erfindungsgemäßen Reifenreparaturvorrichtung werden im Folgenden anhand der beigefügten, schematischen Figuren näher erläutert. Es zeigt:
- Figur 1: in räumlicher Ansicht eine Fahrzeugradfelge mit einer darauf angebrachten, erfindungsgemäßen Reifenreparaturvorrichtung,
- Figur 2: eine vergrößerte Darstellung des Bereichs II aus Figur 1,
- Figur 3: einen Querschnitt durch die in Figur 1 dargestellte Reifenreparaturvorrichtung sowie angrenzender Bereiche der Fahrzeugradfelge,
- Figur 4: eine räumliche Querschnittsansicht eines leicht abgewandelten Ausführungsbeispiels der in Figur 3 gezeigten Reifenreparaturvorrichtung,
- Figur 5: eine weitere räumliche Ansicht der in Figur 4 gezeigten Reifenreparaturvorrichtung von schräg oben, geschnitten in einer Ebene senkrecht zur in Figur 4 gezeigten Mittelachse A,
- Figur 6: eine geschnittene, räumliche Darstellung des linken Teils der in Figur 4 gezeigten Reifenreparaturvorrichtung von schräg unten,
- Figur 7: eine der Figur 1 ähnliche räumliche Darstellung einer an der Fahrzeugradfelge angebrachten Reifenreparaturvorrichtung mit abgenommenem Gehäuse,
- Figur 8a: eine geschnittene, räumliche Darstellung einer weiteren Ausführungsform einer erfindungsgemäßen Reifenreparaturvorrichtung, und
- Figur 8b: eine räumliche Darstellung des Kopfes einer Radschraube, die zur Verwendung mit der in Figur 8a gezeigten Ausführungsform modifiziert ist.

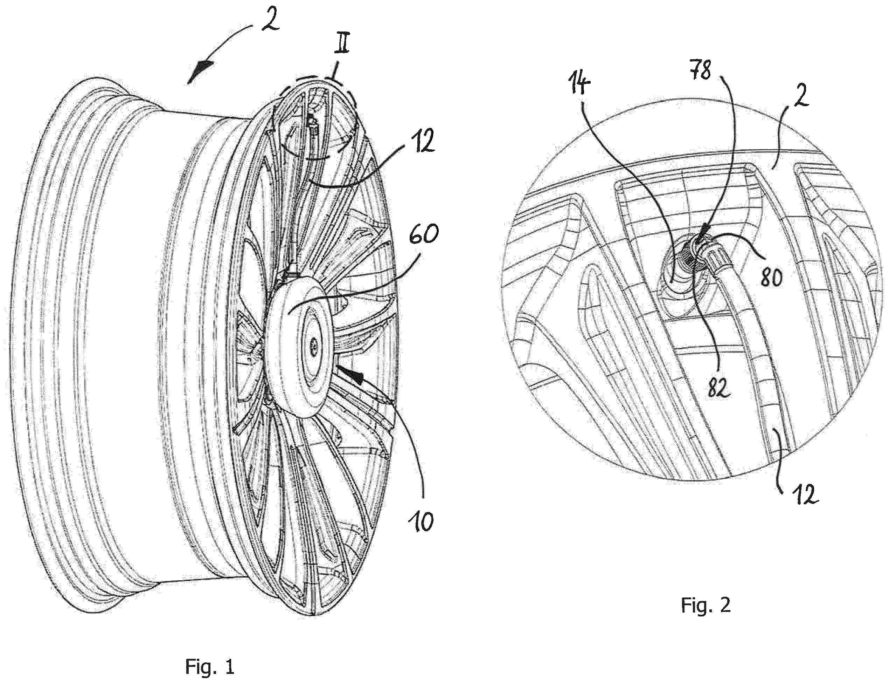

In Figur 1 ist in räumlicher Darstellung ein Fahrzeugrad gezeigt, wobei der Einfachheit halber ein Reifen des Fahrzeugrads weggelassen worden ist, so dass in Figur 1 nur eine Fahrzeugradfelge 2 zu sehen ist. Das Fahrzeugrad ist mittels Radmuttern oder Radschrauben an einem Fahrzeug befestigt, wobei dieses Fahrzeug der Einfachheit halber nicht dargestellt ist. Auf einer Außenseite der Fahrzeugradfelge 2 ist eine allgemein mit 10 bezeichnete Reifenreparaturvorrichtung angebracht, deren konstruktiver Aufbau und Befestigung am Fahrzeugrad im Folgenden näher erläutert wird.

Die Reifenreparaturvorrichtung 10 enthält ähnlich den bekannten Reifenreparaturvorrichtungen vom "Tirefit"-Typ ein Reifendichtmittel, das durch eine Verbindungsleitung 12 in einen zu reparierenden Reifen geleitet werden kann. In Figur 2 ist dargestellt, wie ein reifenseitiges, freies Ende der Verbindungsleitung 12 mit einem zu reparierenden Reifen (nicht dargestellt) verbunden sein kann. Im dargestellten Ausführungsbeispiel wird das reifenseitige Ende der Verbindungsleitung 12 durch Aufschrauben auf ein Reifenventil 14 mit dem Reifen verbunden, wobei das Reifenventil 14 wie bei schlauchlosen Reifen üblich in der Nähe eines äußeren Umfangsrandes der Fahrzeugradfelge 2 in letzterer befestigt ist.

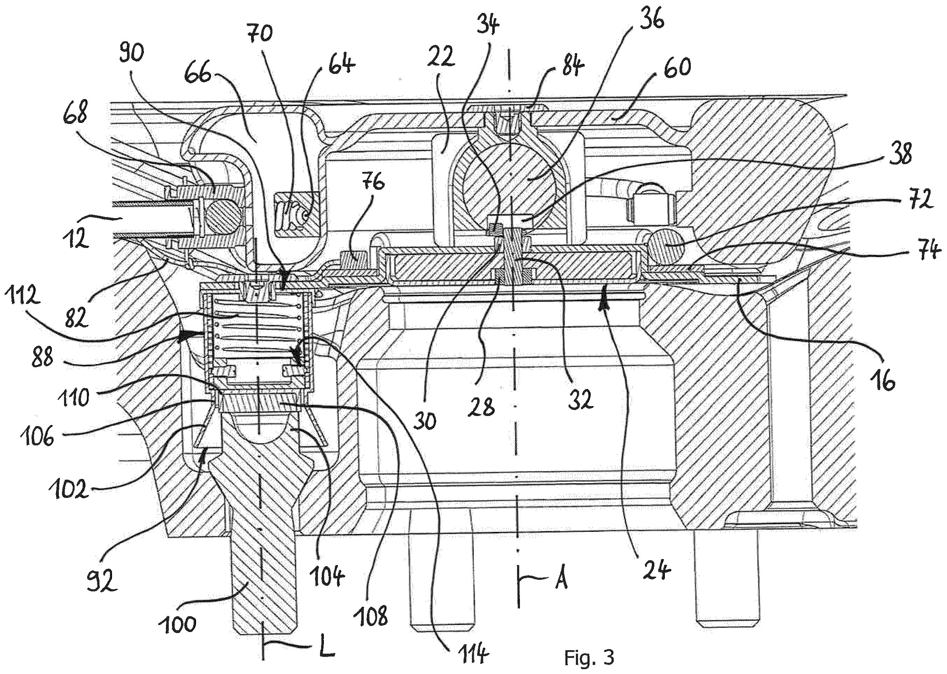

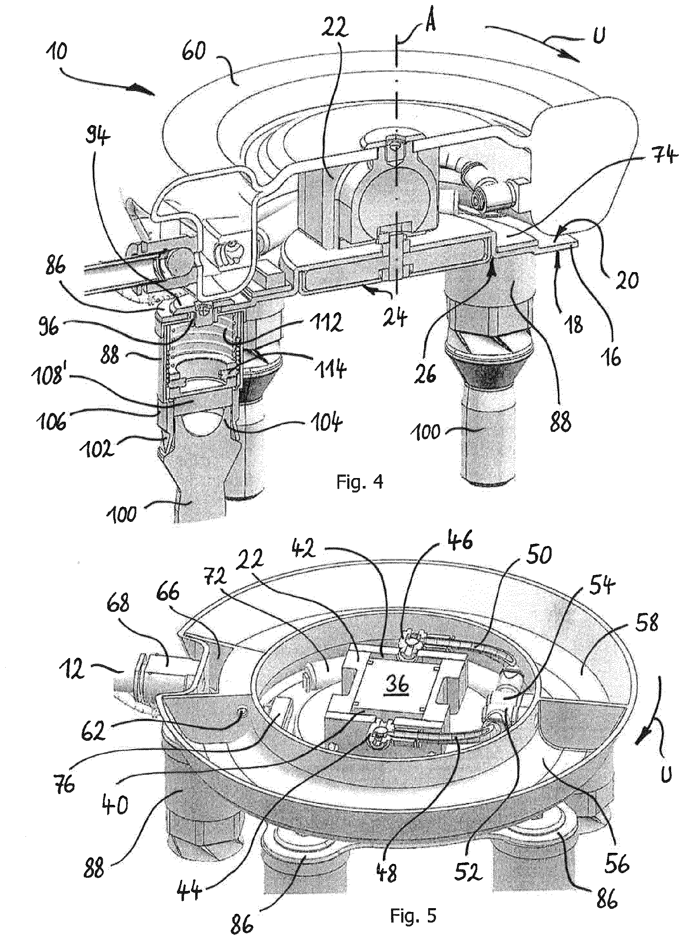

Der konstruktive Aufbau der Reifenreparaturvorrichtung 10 wird nun anhand der Figuren 3 bis 5 genauer erläutert. Die Reifenreparaturvorrichtung 10 weist als tragendes Bauteil ein hier im Wesentlichen plattenförmiges Trägerelement 16 auf, das eine radzugewandte Seite 18 und eine radabgewandte Seite 20 hat (siehe insbesondere Figur 4). Das Trägerelement 16 besteht hier aus Stahlblech, kann jedoch auch aus einem Kunststoff, insbesondere einem faserverstärkten Kunststoff oder einem anderen geeigneten Material gefertigt sein. Auf der radabgewandten Seite 20 des Trägerelements 16 ist in einem mittleren Bereich desselben ein Kompressor 22 zur Erzeugung von Druckluft befestigt. Zum Antrieb des Kompressors 22 dient in den gezeigten Ausführungsbeispielen ein Elektromotor 24, der auf der radzugewandten Seite 18 des Trägerelements 16 in einer tellerförmigen Vertiefung 26 aufgenommen ist, die in einem zentralen Bereich des Trägerelements 16 ausgebildet ist. Der Elektromotor 24 hat eine in zwei Lagern 28, 30 drehbar gelagerte Abtriebswelle 32, die das Trägerelement 16 durchsetzt und an ihrem dem Kompressor 22 zugewandten Ende mit einem Exzenternocken 34 verbunden ist. Der Exzenternocken 34 wirkt mit einem Kolben 36 des Kompressors 22 zusammen, indem er in eine geeignet ausgebildete Aussparung 38 des Kolbens 36 eingreift und bei sich drehender Abtriebswelle 32 den Kolben 36 im Kompressor 22 hin und her bewegt. Der Kolben 36 ist in den hier gezeigten Ausführungsbeispielen ein sogenannter doppeltwirkender Kolben, d. h. jeder Hub des Kolbens 36 ist ein Arbeitshub, mit dem Druckluft erzeugt wird. Dies lässt sich besonders gut in Figur 5 erkennen, in der der Kompressor 22 im Längsschnitt wiedergegeben ist.

Unter Bezugnahme auf insbesondere Figur 5 wird nun die grundsätzliche Funktion einer Reifenreparaturvorrichtung 10 näher beschrieben. Im Kompressor 22 sind zwei Druckkammern 40, 42 gebildet, in denen durch die hin und her gehende Bewegung des Kolbens 36 Druckluft erzeugt werden kann. Jede Druckkammer 40, 42 ist mit einem Ventil 44, 46 versehen, durch welches im Saughub des Kolbens 36 Luft in die jeweilige Druckkammer 40 oder 42 angesaugt wird, und durch das im Druckhub des Kolbens 36 erzeugte Druckluft aus der Druckkammer 40 oder 42 in eine Druckleitung 48 bzw. 50 abgegeben wird, welche den Kompressor 22, genauer seine Druckkammern 40 und 42, mit Druckzuführungsventilen 52 und 54 verbinden, die einer ersten Kammer 56 und einer zweiten Kammer 58 eines Dichtmittelbehälters 60 zugeordnet sind. Sowohl die Ventile 44 und 46 als auch die Druckzuführungsventile 52 und 54 können als einfache Rückschlagventile ausgebildet sein.

Der Dichtmittelbehälter 60 dient zur Aufnahme eines Reifendichtmittels (nicht dargestellt), das im Fall einer Reifenpanne (Reifen verliert Luft oder ist platt) durch die vom Kompressor 22 erzeugte Druckluft aus dem Dichtmittelbehälter 60 durch die Verbindungsleitung 12 in den zu reparierenden Reifen gepumpt wird. Um eine vorzeitige Alterung des Reifendichtmittels zu vermeiden, besteht dieses Reifendichtmittel bei den hier gezeigten Ausführungsbeispielen der Reifenreparaturvorrichtung 10 aus zwei Komponenten, von denen eine Komponente in der ersten Kammer 56 und die andere Komponente in der zweiten Kammer 58 des Dichtmittelbehälters 60 aufbewahrt wird. Bei Benutzung der Reifenreparaturvorrichtung 10 werden die zwei Komponenten des Reifendichtmittels durch die vom Kompressor 22 erzeugte und über die Druckzuführungsventile 52 und 54 den Kammern 56, 58 zugeführte Druckluft durch Auslässe 62 und 64 in eine Mischkammer 66 gedrückt, die hier ebenfalls Teil des Dichtmittelbehälters 60 ist und einem gehäuseseitigen Anschluss 68 der Verbindungsleitung 12 unmittelbar vorgelagert ist. Die Auslässe 62 und 64 können wie aus Figur 3 und Figur 4 ersichtlich mit einer drallbildenden Innenwand 70 versehen sein, um die beiden durch die Auslässe 62, 64 strömenden Komponenten des Reifendichtmittels in eine Drallströmung zu versetzen, was deren innige Vermischung in der Mischkammer 66 besser und schneller ermöglicht. Aus der Mischkammer 66 wird das innig vermischte Reifendichtmittel dann durch den gehäuseseitigen Anschluss 68 in die Verbindungsleitung 12 und durch das Reifenventil 14 in den zu reparierenden Reifen gedrückt. Nachdem das Reifendichtmittel vollständig in den zu reparierenden Reifen gedrückt worden ist, erzeugt der Kompressor 22 weiter Druckluft, um den Reifen aufzupumpen und dadurch in einen fahrfähigen Zustand zu bringen.

Zur Energieversorgung des Elektromotors 24 dienen in den gezeigten Ausführungsbeispielen mehrere Batterien 72, die auf einer hier kreisringförmigen Leiterplatine 74 angeordnet sind, die auf der radabgewandten Seite 20 des Trägerelements 60 um die tellerförmige Vertiefung 26 herum befestigt ist. Die Batterien 72 können aufladbare oder nicht aufladbare Batterien sein und statt der hier gezeigten Anzahl an Batterien 72 können selbstverständlich auch weniger oder mehr Batterien zum Einsatz kommen. Auf der Leiterplatine 74 ist ferner eine elektronische Steuereinheit 76 angeordnet, welche die Funktion der Reifenreparaturvorrichtung 10 steuert. Damit Reifendichtmittel nicht ungewollt oder vorzeitig aus der Verbindungsleitung 12 austritt, sind die hier gezeigten Ausführungsbeispiele am reifenseitigen Ende der Verbindungsleitung 12 mit einem Überwachungsschalter 78 versehen, der beim Aufschrauben des reifenseitigen Endes der Verbindungsleitung 12 auf das Reifenventil 14 betätigt wird und dadurch anzeigt, dass die Reifenreparaturvorrichtung 10 korrekt mit einem zu reparierenden Reifen verbunden ist. Das Signal des Überwachungsschalters 78 wird über elektrische Leitungen 80, 82 zur Steuereinheit 76 geleitet. Erst wenn das Signal des Überwachungsschalters 78 eine korrekte Verbindung mit dem Reifenventil 14 anzeigt, kann der Kompressor 22 und damit die Reifenreparaturvorrichtung 10 in Betrieb gesetzt werden. Dieses in Betrieb setzen kann manuell erfolgen, beispielsweise durch einen von einem Benutzer zu betätigenden Schalter (nicht dargestellt), oder auch automatisch, beispielsweise ausgelöst durch das vom Überwachungsschalter 78 gesandte Signal.

In den dargestellten Ausführungsbeispielen bildet der Dichtmittelbehälter 60 ein insbesondere das Trägerelement 16 und den Kompressor 22 überdeckendes Gehäuse der Reifenreparaturvorrichtung 10. Der Dichtmittelbehälter 60 hat hier eine zumindest näherungsweise torusförmige Gestalt mit einer abgeflachten Außenseite und ist durch eine Schraube 84 am Kompressor 22 befestigt. Das Trägerelement 16 hat in den gezeigten Ausführungsbeispielen eine kreisförmige Grundform mit mehreren am Außenumfang angebrachten laschenförmigen Fortsätzen 86, deren Zweck aus der folgenden Beschreibung hervorgeht.

Es wird nun die Anbringung der Reifenreparaturvorrichtung 10 an einem Fahrzeugrad erläutert. Zur Anbringung an einem Fahrzeugrad ist die Reifenreparaturvorrichtung 10 mit mehreren in Umfangsrichtung U voneinander beabstandeten, hülsenförmigen Halterungselementen 88 versehen, die jeweils ein Befestigungsende 90 und ein freies Ende 92 haben. Jedes hülsenförmige Halterungselement 88 ist mit seinem Befestigungsende 90 mit dem Trägerelement 16 verbunden, hier durch eine Befestigungsschraube 94, die durch den zugehörigen laschenförmigen Fortsatz 86 des Trägerelements 16 verläuft. Jedes hülsenförmige Halterungselement 88 erstreckt sich jeweils von der radzugewandten Seite 18 des Trägerelements 16 entlang einer zur Mittelachse A parallelen Längsachse L bis zu seinem freien Ende 92. In den dargestellten Ausführungsbeispielen ist jedes hülsenförmige Halterungselement 88 um seine Längsachse L drehbar gelagert, indem die sich durch den zugehörigen laschenförmigen Fortsatz 86 erstreckende Befestigungsschraube 94 das hülsenförmige Halterungselement 88 nicht gegen das Trägerelement 16 verspannt, sondern beim Festziehen lediglich in Anlage mit einem am Befestigungsende 90 des Halterungselements 88 ausgebildeten Ringbund 96 gerät und mit diesem verspannt wird. Ferner ist bei den dargestellten Ausführungsbeispielen der Durchmesser einer Öffnung 98 in dem laschenförmigen Fortsatz 86, durch die die Befestigungsschraube 94 verläuft, größer als der Außendurchmesser des Ringbunds 96, sodass jedes hülsenförmige Halterungselement 88 sich radial zur Längsachse L verlagern kann. Anders ausgedrückt ist jedes hülsenförmige Halterungselement 88 mit seitlichem Spiel im Trägerelement 16, genauer in dem zugehörigen laschenförmigen Fortsatz 86 des Trägerelements 16 aufgenommen.

Wie aus den beigefügten Figuren zu ersehen ist, korrespondieren die Positionen der hülsenförmigen Halterungselemente 88 am Trägerelement 16 somit zumindest näherungsweise mit den Positionen von Radmuttern oder Radschrauben 100, mit denen die Fahrzeugradfelge 2 am Fahrzeug befestigt ist. Zur Anbringung der Reifenreparaturvorrichtung 10 werden die hülsenförmigen Halterungselemente 88 auf die Radschrauben 100 ausgerichtet und dann auf die Radschrauben 100 aufgesetzt. Um diesen Vorgang zu vereinfachen, weisen in den gezeigten Ausführungsbeispielen die hülsenförmigen Halterungselemente 88 an ihrem freien Ende 92 jeweils eine trichterförmige Erweiterung 102 auf, die einen Kopf 104 jeder Radmutter oder Radschraube 100 in das hülsenförmige Halterungselement 88 hineinführt. Damit die Reifenreparaturvorrichtung 10 am Fahrzeugrad bzw. der Fahrzeugradfelge 2 befestigt bleibt, ist ein dem freien Ende 92 benachbarter Endabschnitt 106 jedes hülsenförmigen Halterungselements 88 dazu ausgebildet, haltend mit dem zugeordneten Kopf 104 einer Radmutter oder Radschraube 100 in Eingriff zu treten.

In den hier gezeigten Ausführungsbeispielen ist in dem Endabschnitt 106 jeweils ein hier scheibenförmiger Magnet 108 befestigt, der durch seine magnetische Wechselwirkung mit dem Kopf 104 der Radmutter oder Radschraube 100 zum Kopf 104 gezogen wird und dadurch eine Haltekraft erzeugt. Bei dem in Figur 3 gezeigten Ausführungsbeispiel ist der Magnet 108 zur Verbesserung der magnetischen Wechselwirkung mit dem Kopf 104 in einem tassenförmigen Magnetfeldlinienfokussierungsbauteil 110 aufgenommen, welches die Magnetfeldlinien des Magneten 108 auf den Kopf 104 konzentriert.

Bei den hier gezeigten Ausführungsbeispielen ist jeder Magnet 108 ferner in Richtung der Längsachse L federnd gelagert, wobei eine Feder 112 den zugehörigen Magneten 108 in Richtung des freien Endes 92 des hülsenförmigen Halterungselements 88 vorspannt. Um dem Aufsetzen der Reifenreparaturvorrichtung 10 auf die Köpfe 104 der Radmuttern oder Radschrauben 100 einen definierteren Charakter zu verleihen, ist in den dargestellten Ausführungsbeispielen in jedem hülsenförmigen Halterungselement 88 zwischen dem Befestigungsende 90 und dem Magneten 108 eine hier nur schematisch wiedergegebene Rasteinrichtung 114 vorhanden, die es ermöglicht, jeden Magneten 108 beim Aufsetzen auf einen Kopf 104 entgegen der durch die Feder 112 erzeugten federnden Vorspannung definiert in mehrere in Längsachsenrichtung L aufeinanderfolgende Rastpositionen zu verschieben. In einer Bedienungsanleitung der Reifenreparaturvorrichtung 10 kann dann beispielsweise angegeben sein, dass die Reifenreparaturvorrichtung 10 dann korrekt am Fahrzeugrad befestigt ist, wenn mehrere aufeinanderfolgende "Klicks", beispielsweise drei oder vier "Klicks", wahrgenommen worden sind. Die Rasteinrichtung 114 verhindert auch, dass der Magnet 108 ungewollt in das hülsenförmige Halterungselement 88 hineingedrückt wird.

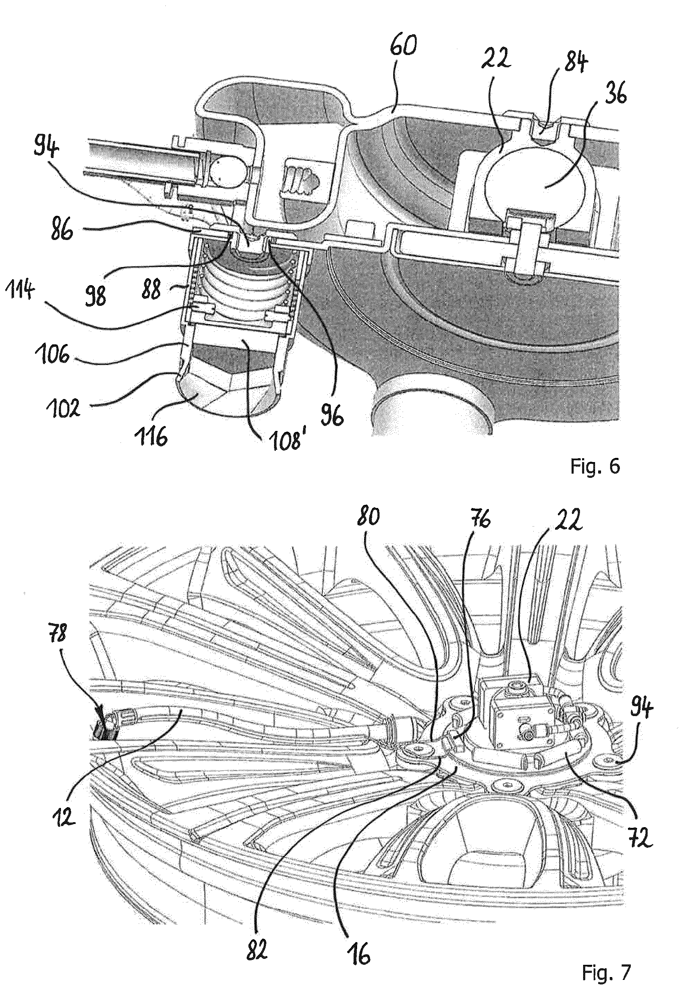

Die in den Figuren 4, 5 und 6 gezeigte Ausführungsform unterscheidet sich von dem in Figur 3 dargestellten Ausführungsbeispiel dadurch, dass die trichterförmige Erweiterung 102 am freien Ende 92 jedes hülsenförmigen Halterungselements 88 auf ihrer Innenseite mit wendelsegmentförmigen Leitflächen 116 versehen ist und dass der Endabschnitt 106 nicht wie in Figur 3 kreiszylindrisch ausgeführt ist, sondern einen sechseckigen Querschnitt aufweist, der dem Querschnitt des Kopfes 104 der Radmutter oder Radschraube 100 entspricht. Die wendelsegmentförmigen Leitflächen 116 bewirken bei einem in Kontakt kommen mit einem Kopf 104 falls erforderlich eine Drehung des hülsenförmigen Halterungselements 88 um seine Längsachse L, bis die Position der Ecken der sechseckigen Querschnitte von Kopf 104 und Endabschnitt 106 übereinstimmen, woraufhin der Endabschnitt 106 auf den Kopf 104 rutscht und der hier sechseckig ausgeführte Magnet 108' in Anlage mit der Oberseite des Kopfes 104 gerät. Die magnetische Wechselwirkung zwischen dem Magnet 108' und dem Kopf 104 und damit die Haltekraft wird auf diese Weise optimiert.

Bei den dargestellten Ausführungsformen der Reifenreparaturvorrichtung 10 entspricht die Anzahl der hülsenförmigen Halterungselemente 88 der Anzahl der Radmuttern oder Radschrauben 100. Bei hier nicht dargestellten Ausführungsbeispielen ist die Anzahl der hülsenförmigen Halterungselemente 88 geringer als die Anzahl der Radmuttern oder Radschrauben 100. Gemäß einer hier nicht gezeigten Ausführungsform hat die Reifenreparaturvorrichtung 10 nur drei hülsenförmige Halterungselemente 88, die in Umfangsrichtung voneinander beabstandet sind und deren Positionen mit nur drei der Radmuttern oder Radschrauben 100 des Fahrzeugrads korrespondieren.

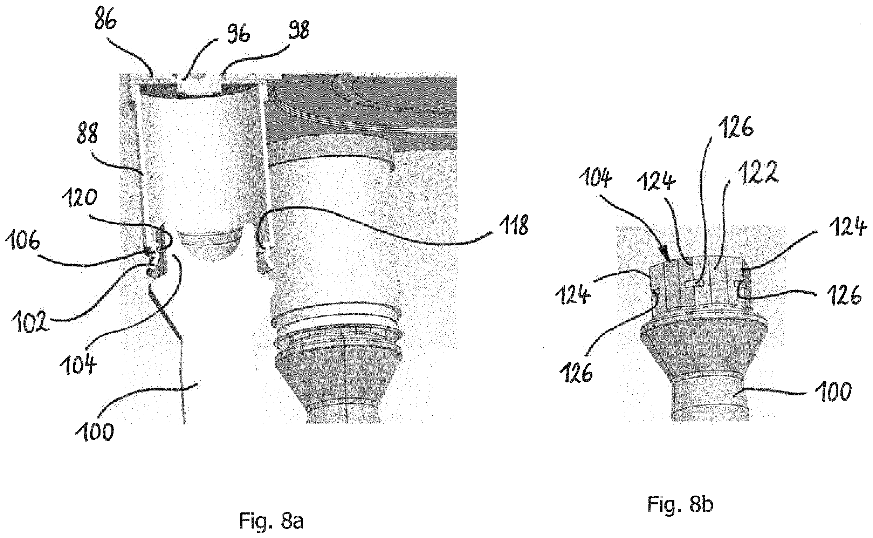

Figur 8a zeigt eine weitere Ausführungsform eines hülsenförmigen Halterungselements 88 der Reifenreparaturvorrichtung 10, bei der der Endabschnitt 106 jedes hülsenförmigen Halterungselements 88 ohne einen Magnet 108 haltend mit einem Kopf 104 einer Radmutter oder Radschraube 100 in Eingriff treten kann. Hierzu ist bei der in Figur 8a gezeigten Ausführungsform auf der Innenseite des Endabschnitts 106 in einer Ringnut 118 ein Sprengring 120 angeordnet und gehalten. Ein solcher auch als Federring zu bezeichnender Sprengring 120 ist an einer Stelle unterbrochen und federt in radialer Richtung. Der Sprengring 120 wird mit Vorspannung in der Ringnut platziert und ist somit fest in der Ringnut 118 gehalten. Beim Aufschieben des hülsenförmigen Halterungselements 88 auf den Kopf 104 einer Radmutter oder Radschraube 100 wird der Sprengring 120 etwas auseinander gedrückt und kann dann an einer Umfangsfläche 122 des Kopfes 104 entlang rutschen. Weil der Kopf 104 im gezeigten Ausführungsbeispiel einen sechseckigen Querschnitt aufweist, hat die Umfangsfläche 122 sechs Ecken 124.

Figur 8b zeigt den Kopf 104 einer Radschraube 100, bei der im Bereich der Ecken 124 der Umfangsfläche 122 des Kopfes 104 schlitzförmige Rastausnehmungen 126 ausgebildet sind, die sich in Umfangsrichtung des Kopfes 104 erstrecken. Im gezeigten Ausführungsbeispiel ist jede Ecke 124 mit einer einzigen Rastausnehmung 126 versehen, doch können pro Ecke 124 auch mehrere in Längsrichtung L voneinander beabstandete Rastausnehmungen 126 vorhanden sein, sodass sich mehrere Rastpositionen ergeben (nicht gezeigt). Beim Aufschieben des Endabschnitts 106 des hülsenförmigen Halterungselements 88 rastet der Sprengring 120 in die in Umfangsrichtung voneinander beabstandeten Rastausnehmungen 126 ein, wodurch jedes hülsenförmige Halterungselement 88 und damit die gesamte Reifenreparaturvorrichtung 10 sicher an der Fahrzeugradfelge 2 gehalten wird.

## Patentansprüche

1. Reifenreparaturvorrichtung (10) zur Anbringung an einem Fahrzeugrad, das mit Radmuttern oder Radschrauben (100) an einem Fahrzeug befestigt ist, mit:
- einem Trägerelement (16), dem eine Mittelachse (A) und eine Umfangsrichtung (U) zugeordnet ist und das eine radzugewandte Seite (18) und eine radabgewandte Seite (20) aufweist,
- einem an dem Trägerelement (16) befestigten Kompressor (22),
- einer mit dem Kompressor (22) betriebsfähig verbundenen Antriebseinrichtung für den Kompressor (22),
- einem Dichtmittelbehälter (60) zur Aufnahme eines Reifendichtmittels, wobei der Kompressor (22) fluidleitend mit dem Dichtmittelbehälter (60) verbunden ist,
- einer Verbindungsleitung (12), die dazu ausgestaltet ist, mit dem Dichtmittelbehälter (60) und einem zu reparierenden Reifen fluidleitend verbunden zu werden, und
- mehreren Halterungselementen (88),
**dadurch gekennzeichnet, dass** die Halterungselemente (88) hülsenförmig sind und jeweils ein Befestigungsende (90) und ein freies Ende (92) haben, wobei die Halterungselemente (88) an ihrem Befestigungsende (90) mit dem Trägerelement (16) verbunden sind und sich jeweils von der radzugewandten Seite (18) des Trägerelements (16) entlang einer zur Mittelachse (A) parallelen Längsachse (L) erstrecken und in Umfangsrichtung (U) voneinander beabstandet sind, wobei die Positionen der hülsenförmigen Halterungselemente (88) zumindest näherungsweise mit Positionen von Radmuttern oder Radschrauben (100) korrespondieren, mit denen das Fahrzeugrad am Fahrzeug befestigt ist, und wobei ein dem freien Ende (92) benachbarter Endabschnitt (106) jedes hülsenförmigen Halterungselements (88) dazu ausgeführt ist, haltend mit einem Kopf (104) einer Radmutter oder Radschraube (100) in Eingriff zu kommen.

2. Reifenreparaturvorrichtung nach Anspruch 1,
wobei das freie Ende (92) jedes hülsenförmigen Halterungselements (88) eine trichterförmige Erweiterung (102) aufweist.

3. Reifenreparaturvorrichtung nach Anspruch 2,
wobei jedes hülsenförmige Halterungselement (88) um seine Längsachse (L) drehbar gelagert ist.

4. Reifenreparaturvorrichtung nach Anspruch 3,
wobei die trichterförmige Erweiterung (102) auf ihrer Innenseite wendelsegmentförmige Leitflächen (116) aufweist, die das hülsenförmige Halterungselement (88) auf einem zugeordneten Kopf (104) einer Radmutter oder Radschraube (100) zu zentrieren vermögen.

5. Reifenreparaturvorrichtung nach einem der vorhergehenden Ansprüche, wobei einige oder alle hülsenförmigen Halterungselemente (88) radial zu ihrer Längsachse (L) verschiebbar gelagert sind.

6. Reifenreparaturvorrichtung nach einem der vorhergehenden Ansprüche, wobei in dem Endabschnitt (106) jedes hülsenförmigen Halterungselements (88) ein Magnet (108) befestigt ist, der an einem Kopf (104) einer Radmutter oder Radschraube (100) anhaften kann.

7. Reifenreparaturvorrichtung nach Anspruch 6,
wobei der Magnet (108) in Richtung der Längsachse (L) federnd gelagert und in Richtung des freien Endes (92) des hülsenförmigen Halterungselements (88) federnd vorgespannt ist.

8. Reifenreparaturvorrichtung nach Anspruch 7,
wobei der Magnet (108) in dem Endabschnitt (106) des hülsenförmigen Halterungselements (88) entgegen der federnden Vorspannung in mehrere aufeinanderfolgende Rastpositionen verschiebbar ist.

9. Reifenreparaturvorrichtung nach einem der vorhergehenden Ansprüche, wobei der Dichtmittelbehälter (60) zwei getrennte Kammern (56, 58) für zwei Komponenten eines Reifendichtmittels und eine Mischkammer (66) zum Vermischen der beiden Komponenten aufweist.

10. Reifenreparaturvorrichtung nach Anspruch 9,
wobei die Mischkammer (66) einem Anschluss (68) für die Verbindungsleitung (12) unmittelbar vorgelagert ist.

11. Reifenreparaturvorrichtung nach einem der vorhergehenden Ansprüche, wobei der Dichtmittelbehälter (60) ein das Trägerelement (16) und den Kompressor (22) überdeckendes Gehäuse der Reifenreparaturvorrichtung bildet.

12. Reifenreparaturvorrichtung nach einem der vorhergehenden Ansprüche, wobei ein Energiespeicher zum Betreiben der Antriebseinrichtung mit der Antriebseinrichtung betriebsfähig verbunden ist.

13. Reifenreparaturvorrichtung nach Anspruch 12,
wobei der Energiespeicher eine Batterie (72) oder eine Mehrzahl von Batterien (72) ist.

14. Reifenreparaturvorrichtung nach einem der vorhergehenden Ansprüche, wobei die Verbindungsleitung (12) an einem mit dem zu reparierenden Reifen zu verbindenden Ende einen Überwachungsschalter (78) aufweist, der einen Betrieb der Antriebseinrichtung nur dann ermöglicht, wenn das mit dem zu reparierenden Reifen zu verbindende Ende mit dem Reifen verbunden ist.

15. Reifenreparaturvorrichtung nach einem der vorhergehenden Ansprüche, wobei die Antriebseinrichtung ein Elektromotor (24) ist, der in einer tellerförmigen Vertiefung (26) auf der radzugewandten Seite (18) des Trägerelements (16) angeordnet ist.

16. Reifenreparaturvorrichtung nach einem der vorhergehenden Ansprüche, wobei in dem Endabschnitt (106) jedes hülsenförmigen Halterungselements (88) ein Sprengring (120) befestigt ist, der mit einem Kopf (104) einer Radmutter oder Radschraube (100) rastend in Eingriff treten kann.

## Claims

1. A tire repair device (10) for attachment to a vehicle wheel, which is attached to a vehicle by wheel nuts or wheel bolts (100), comprising:
- a carrier element (16), associated with which is a center line (A) and a circumferential direction (U) and which has a side (18) facing the wheel and a side (20) facing away from the wheel;
- a compressor (22) attached to the carrier element (16);
- a drive mechanism for the compressor (22) which is operationally connected to the compressor (22);
- a sealant container (60) for taking up a tire sealant, wherein the compressor (22) is connected in a fluid-conducting manner to the sealant container (60);
- a connection line (12), which is configured to be connected in a fluid-conducting manner to the sealant container (60) and to a tire to be repaired; and
- a number of mounting elements (88), **characterized in that** the mounting elements (88) are sleeve-shaped and each have an attachment end (90) and a free end (92), wherein the mounting elements (88) are connected at their attachment end (90) to the carrier element (16) and respectively extend from the side (18) of the carrier element (16) facing the wheel along a longitudinal axis (L) parallel to the center line (A) and are spaced at a distance from one another in the circumferential direction (U), wherein the positions of the sleeve-shaped mounting elements (88) correspond at least approximately to positions of wheel nuts or wheel bolts (100) by means of which the vehicle wheel is attached to the vehicle, and wherein an end section (106) of each sleeve-shaped mounting element (88) adjacent to the free end (92) is configured to retentively engage with a head (104) of a wheel nut or wheel bolt (100).

2. The tire repair device according to Claim 1, wherein the free end (92) of each sleeve-shaped mounting element (88) has a funnel-shaped widening (102).

3. The tire repair device according to Claim 2, wherein each sleeve-shaped mounting element (88) is supported rotatably about its longitudinal axis (L).

4. The tire repair device according to Claim 3, wherein the funnel-shaped widening (102) on its inside has guide surfaces (116) in the form of helical segments, which are adapted to center the sleeve-shaped mounting element (88) on an associated head (104) of a wheel nut or wheel bolt (100).

5. The tire repair device according to any one of the preceding Claims, wherein some or all sleeve-shaped mounting elements (88) are supported displaceably radially to their longitudinal axis (L).

6. The tire repair device according to any one of the preceding Claims, wherein mounted in the end section (106) of each sleeve-shaped mounting element (88) is a magnet (108), which is able to adhere to a head (104) of a wheel nut or wheel bolt (100).

7. The tire repair device according to Claim 6, wherein the magnet (108) is spring-mounted in the direction of the longitudinal axis (L) and is spring-preloaded towards the free end (92) of the sleeve-shaped mounting element (88).

8. The tire repair device according to Claim 7, wherein the magnet (108) in the end section (106) of the sleeve-shaped mounting element (88) is displaceable against the spring preloading into a number of successive locking positions.

9. The tire repair device according to any one of the preceding Claims, wherein the sealant container (60) comprises two separate chambers (56, 58) for two components of a tire sealant and a mixing chamber (66) for mixing the two components.

10. The tire repair device according to Claim 9, wherein the mixing chamber (66) is located directly upstream of a connection (68) for the connection line (12).

11. The tire repair device according to any one of the preceding Claims, wherein the sealant container (60) forms a housing of the tire repair device covering the carrier element (16) and the compressor (22).

12. The tire repair device according to any one of the preceding Claims, wherein an energy storage for operating the drive mechanism is operationally connected to the drive mechanism.

13. The tire repair device according to Claim 12, wherein the energy storage is a battery (72) or a plurality of batteries (72).

14. The tire repair device according to any one of the preceding Claims, wherein the connection line (12) comprises, at an end to be connected to the tire to be repaired, a monitoring switch (78), which enables operation of the drive mechanism only when the end to be connected to the tire to be repaired is connected to the tire.

15. The tire repair device according to any one of the preceding Claims, wherein the drive mechanism is an electric motor (24), which is arranged in a plate-shaped recess (26) on the side (18) of the carrier element (16) facing the wheel.

16. The tire repair device according to any one of the preceding Claims, wherein mounted in the end section (106) of each sleeve-shaped mounting element (88) is a lock washer (120) adapted to engage in a locking manner with a head (104) of a wheel nut or wheel bolt (100).

## Revendications

1. Dispositif de réparation de pneu (10) destiné à être monté sur une roue de véhicule qui est fixée à un véhicule par des écrous de roue ou des boulons de roue (100), comprenant:
- un élément de support (16) auquel sont associés un axe central (A) et une direction circonférentielle (U) et qui présente un côté (18) tourné vers la roue et un côté (20) opposé à la roue,
- un compresseur (22) fixé à l'élément de support (16),
- un dispositif d'entraînement pour le compresseur (22), relié de manière fonctionnelle au compresseur (22),
- un réservoir de produit d'étanchéité (60) destiné à recevoir un produit d'étanchéité de pneu, dans lequel le compresseur (22) est relié de manière fluidique au réservoir de produit d'étanchéité (60),
- un conduit de raccordement (12) qui est conçu pour être raccordé de manière fluidique au réservoir de produit d'étanchéité (60) et à un pneu à réparer, et
- plusieurs éléments de fixation (88),
**caractérisé en ce que** les éléments de support (88) sont en forme de manchon et ont chacun une extrémité de fixation (90) et une extrémité libre (92), les éléments de support (88) étant reliés à leur extrémité de fixation (90) par l'élément de support (16) et partant chacun du côté (18) de l'élément de support (16) tourné vers la roue le long d'un axe longitudinal (L) parallèle à l'axe central (A) et étant espacés les uns des autres dans la direction circonférentielle (U), dans lequel les positions des éléments de retenue en forme de manchon (88) correspondent au moins approximativement aux positions des écrous de roue ou des boulons de roue (100) avec lesquels la roue du véhicule est fixée au véhicule, et dans lequel une partie d'extrémité (106) de chaque élément de support en forme de manchon (88), adjacente à l'extrémité libre (92), est conçue pour venir en prise de manière fixe avec une tête (104) d'un écrou de roue ou d'un boulon de roue (100).

2. Dispositif de réparation de pneu selon la revendication 1,
dans lequel l'extrémité libre (92) de chaque élément de retenue en forme de manchon (88) comprend un élargissement en forme d'entonnoir (102).

3. Dispositif de réparation de pneu selon la revendication 2
dans lequel chaque élément de retenue en forme de manchon (88) est monté de manière à pouvoir tourner autour de son axe longitudinal (L).

4. Dispositif de réparation de pneu selon la revendication 3
dans lequel l'élargissement en forme d'entonnoir (102) présente sur son côté intérieur des surfaces de guidage (116) en forme de segments d'hélice, qui permettent de centrer l'élément de retenue en forme de manchon (88) sur une tête associée (104) d'un écrou de roue ou d'un boulon de roue (100).

5. Dispositif de réparation de pneu selon l'une quelconque des revendications précédentes,
dans lequel certains ou tous les éléments de retenue (88) en forme de manchon sont montés de manière à pouvoir se déplacer radialement par rapport à leur axe longitudinal (L).

6. Dispositif de réparation de pneu selon l'une quelconque des revendications précédentes,
dans lequel un aimant (108) est fixé dans la partie d'extrémité (106) de chaque élément de retenue en forme de manchon (88), lequel peut adhérer à une tête (104) d'un écrou de roue ou d'un boulon de roue (100).

7. Dispositif de réparation de pneu selon la revendication 6,
dans lequel l'aimant (108) étant monté élastiquement dans la direction de l'axe longitudinal (L) et étant précontraint élastiquement en direction de l'extrémité libre (92) de l'élément de support (88) en forme de manchon.

8. Dispositif de réparation de pneu selon la revendication 7,
dans lequel l'aimant (108) peut être déplacé dans la partie d'extrémité (106) de l'élément de retenue en forme de manchon (88) à l'encontre de la précontrainte élastique dans une pluralité de positions d'enclenchement successives.

9. Dispositif de réparation de pneu selon l'une quelconque des revendications précédentes, dans lequel le réservoir de produit d'étanchéité (60) comprend deux chambres séparées (56, 58) pour deux composants d'un produit d'étanchéité pour pneus et une chambre de mélange (66) pour mélanger les deux composants.

10. Dispositif de réparation de pneu selon la revendication 9,
dans lequel la chambre de mélange (66) est située directement en amont d'un raccord (68) pour le conduit de raccordement (12).

11. Dispositif de réparation de pneu selon l'une quelconque des revendications précédentes, dans lequel le réservoir de produit d'étanchéité (60) forme un boîtier du dispositif de réparation de pneu recouvrant l'élément de support (16) et le compresseur (22).

12. Dispositif de réparation de pneu selon l'une quelconque des revendications précédentes, dans lequel un accumulateur d'énergie destiné à faire fonctionner le dispositif d'entraînement est relié de manière fonctionnelle au dispositif d'entraînement.

13. Dispositif de réparation de pneu selon la revendication 12,
dans lequel l'accumulateur d'énergie est une batterie (72) ou une pluralité de batteries (72).

14. Dispositif de réparation de pneu selon l'une quelconque des revendications précédentes, dans lequel le conduit de raccordement (12) comporte, à une extrémité devant être reliée au pneu à réparer, un commutateur de surveillance (78) qui permet de faire fonctionner le dispositif d'entraînement uniquement lorsque l'extrémité devant être reliée au pneu à réparer est reliée au pneu.

15. Dispositif de réparation de pneu selon l'une quelconque des revendications précédentes, dans lequel le dispositif d'entraînement est un moteur électrique (24) qui est disposé dans un renfoncement (26) en forme de cuvette sur le côté (18) de l'élément de support (16) qui est tourné vers la roue.

16. Dispositif de réparation de pneu selon l'une quelconque des revendications précédentes, dans lequel un circlip (120) est fixé dans la partie d'extrémité (106) de chaque élément de retenue en forme de manchon (88), lequel peut s'engager par encliquetage avec une tête (104) d'un écrou de roue ou d'un boulon de roue (100).
